Europäisches Patentamt

European Patent Office

Office européen des brevets

(19)

(11) Veröffentlichungsnummer: **0 111 622**
**B1**

(12) **EUROPÄISCHE PATENTSCHRIFT**

(45) Veröffentlichungstag der Patentschrift:
25.01.89

(51) Int. Cl.⁴: **G 12 B 11/00,** G 01 D 11/28

(21) Anmeldenummer: **83104878.0**

(22) Anmeldetag: **18.05.83**

(54) **Beleuchtungseinrichtung.**

(30) Priorität: **27.10.82 DE 3239783**

(43) Veröffentlichungstag der Anmeldung:
**27.06.84 Patentblatt 84/26**

(45) Bekanntmachung des Hinweises auf die Patenterteilung:
**25.01.89 Patentblatt 89/4**

(84) Benannte Vertragsstaaten:
**DE FR GB**

(56) Entgegenhaltungen:
**EP-A-0 006 361**
**EP-A-0 078 372**
**US-A-3 349 234**
**US-A-3 729 626**

(73) Patentinhaber: **VDO Adolf Schindling AG,
Gräfstrasse 103, D-6000 Frankfurt/Main (DE)**

(72) Erfinder: **Sell, Gerhard, Im Kirchfeld 13, D-6384
Schmitten 1 (DE)**

(74) Vertreter: **Könekamp, Herbert, Dipl.- Ing., Sodener
Strasse 9, D-6231 Schwalbach (DE)**

EP 0 111 622 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Beleuchtungseinrichtung für ein Ziffernblatt aus einem transparentem Material, mit einer längs des Umfangsrandes am Ziffernblatt ausgebildeten, gegenüber der Ebene des Ziffernblatts geneigten lichtreflektierenden Fläche zum Umlenken der Lichtstrahlen einer hinter der Ebene des Ziffernblatts angeordneten Lichtquelle in das Ziffernblatt.

Bei derartigen Beleuchtungseinrichtungen ist es bekannt, mehrere Lichtquellen gleichmäßig über den Umfangsrand verteilt anzuordnen um zu einer gleichstarken Ausleuchtung des ganzen Ziffernblattes zu kommen. Damit sollen die sonst bei nur einer Lichtquelle entstehenden Lichtverluste bei der Lichtübertragung zu den von der Lichtquelle entfernteren Bereichen des Ziffernblattes vermieden werden. Neben der aufwendigen und teuren Installation, die mehrere Lichtquellen benötigen, ist dazu auch ein großer Einbauraum sowie eine zeitaufwendige Montage erforderlich. Darüber hinaus ist der Energieverbrauch auch erheblich.

Es ist daher Aufgabe der Erfindung, eine Beleuchtungseinrichtung nach dem Oberbegriff zu schaffen, die bei einfachem Aufbau eine gleichmäßig gute Ausleuchtung gewährleistet.

Diese Aufgabe wird erfindungsgemäß dadurch gelöst, daß das Ziffernblatt mit einem von der lichtreflektierenden Fläche ausgehenden hohlzylindrischen Lichtleiterrand ausgebildet ist, der Einkopplungsflächen zum einkoppeln des Lichts der Lichtquelle in Umfangsrichtung in den Lichtleiterrand besitzt, mit ausgehend von den Einkopplungsflächen sich verringernder Höhe des Lichtleiterrandes und Ausbildung der dem Ziffernblatt abgewandten Stirnseite des Lichtleiterrandes als die in Umfangsrichtung im Lichtleiterrand verlaufenden Lichtstrahlen zur lichtreflektierenden Fläche umlenkenden Reflexionsfläche. Durch diese erfindungsgemäße einfache Ausbildung wird trotz des Erfordernisses von nur noch einer Lichtquelle eine gleichmäßig gute Ausleuchtung an allen Stellen des Ziffernblattes erzielt. Dies geschieht dadurch, daß das an den Einkopplungsflächen in den Lichtleiterrand eingeleitete Licht in Umfangsrichtung in diesem umläuft. Dabei treffen diese Lichtstrahlen nach und nach auf die Reflexionsfläche und werden dort zum Ziffernblatt umgelenkt. Durch das rampenartige Ansteigen der Reflexionsfläche, wird nach und nach immer nur ein etwa gleicher Anteil der Lichtstrahlen umgelenkt, so daß der Anteil, der das Ziffernblatt erreichenden Lichtstrahlen an jeder Stelle des Umfangsrandes des Ziffernblattes weitgehend gleich ist.

Da nur noch eine Lichtquelle benötigt wird und damit keine umfangreiche Installation mehr erforderlich ist, kann der benötigte Bauraum sehr gering gehalten werden, was insbesondere von Vorteil ist, wenn die Beleuchtungseinrichtung zum Beleuchten von Instrumenten am Armaturenbrett eines Kraftfahrzeuges dient, da dort nur sehr wenig Einbauraum zur Verfügung steht. Bei solchen Instrumenten bildet der hohlzylindrische Lichtleiterrand zusätzlich noch einen Schutz für das innerhalb des Hohlzylinders angeordnete Meß- und Antriebswerk, was sich insbesondere bei der Montage vorteilhaft auswirkt.

Der hohlzylindrische Lichtleiterrand kann jede zylindrische Form besitzen, ist aber vorzugsweise ringförmig ausgebildet. Zur optimalen Lichtleiterübertragung entspricht vorteilhafterweise die Breite des Lichtleiterbandes etwa der Breite der lichtreflektierenden Fläche des Ziffernblattes.

Die Höhe des Lichtleiterrandes kann linear sich verringernd ausgebildet sein. Günstiger ist es jedoch, wenn die Höhe des Lichtleiterrandes nach einer quadratischen Funktion sich verringernd ausgebildet ist. Dadurch wird ein größerer Anteil der Lichtstrahlen zu dem den Einkupplungsflächen entfernten Bereich geleitet, so daß der im Lichtleiter mit zunehmender Entfernung sich vergrößernde Lichtverlust ausgeglichen wird. Damit wird eine gleichmäßige Ausleuchtung des Ziffernblattes von allen Seiten her gewährleistet.

Eine Vergrößerung der Reflexionsfläche und damit eine günstige Ausleuchtung wird erreicht, wenn die Reflexionsfläche quer zur Erstreckung des Lichtleiterrandes geneigt ist. Darüber hinaus kann je nach der Richtung der Neigung entweder das außerhalb oder das innerhalb des Hohlzylinders vorhandene Streulicht vom Lichtleiterrand erfaßt und zum Ziffernblatt geleitet werden.

Ist die Steigung, mit der sich die Reflexionsfläche über ihre Länge erstreckt, nicht ausreichend, um die Lichtstrahlen auf dem kürzesten Weg zum Ziffernblatt zu leiten, kann die Reflexionsfläche aus einer Vielzahl in Längserstreckung des Lichtleiterrandes hintereinander angeordneten Umlenkflächen gebildet sein. Diese Umlenkflächen können mit gleichem Abstand zueinander und/oder gleicher Höhe von der Stirnseite des Lichtleiterrandes aus ausgebildet sein und sind vorzugsweise die den im Lichtleiterrand in Umfangsrichtung verlaufenden Lichtstrahlen zugewandten Flanken von an der Stirnseite des Lichtleiterrandes ausgebildeten Kerben. Auf diese Weise kann immer der günstigste Umlenkwinkel benutzt werden, ohne daß die Höhe der Lichtleitkante groß sein muß. Diese flache Ausführungsmöglichkeit unterstützt das geringe Einbauraumerfordernis.

Eine räumlich unabhängige Anordnung der Lichtquelle kann dadurch erreicht werden, daß die Lichtquelle radial außerhalb des Lichtleiterrandes angeordnet und ein Lichtleiteransatz vom Ziffernblatt zur Lichtquelle geführt ist. Eine solche räumliche Unabhängigkeit ermöglicht es auch, daß der Lichtquelle die Einkopplungsflächen mehrerer Ziffernblätter zugewandt sind, so daß zur Beleuchtung mehrerer Instrumente nur eine Lichtquelle nötig ist. Dies führt zu extremer Bauraumeinsparung und erheblich reduziertem Installationsaufwand.

Ist der Querschnitt des Ziffernblatts sich vom Umfangsrand zur Mitte des Ziffernblattes verringernd ausgebildet, so werden auch im Ziffernblatt Lichtverluste durch Strahlen mit größerer Entfernungen im Ziffernblatt ausgeglichen und eine gleichmäßig gute Ausleuchtung an allen Stellen des Ziffernblattes erreicht.

Eine gute Ziffernblattausleuchtung ist auch gegeben, wenn im Ziffernblatt ein oder mehrere durchgehende Öffnungen ausgebildet sind, durch die Spindelantriebe und/oder Zeigernaben von Zeigern hindurchführbar sind. Sind dabei an den aus transparentem Werkstoff bestehenden Zeigern bzw. den Zeigernaben noch Lichtumlenkflächen ausgebildet, so ist es zusätzlich noch möglich, die Zeiger mit dem Licht des Ziffernblattes auszuleuchten.

Ein Ausführungsbeispiel der Erfindung ist in der Zeichnung dargestellt und wird im folgenden näher beschrieben. Es zeigen

Figur 1 zwei von einer Lichtquelle beleuchtete Instrumente

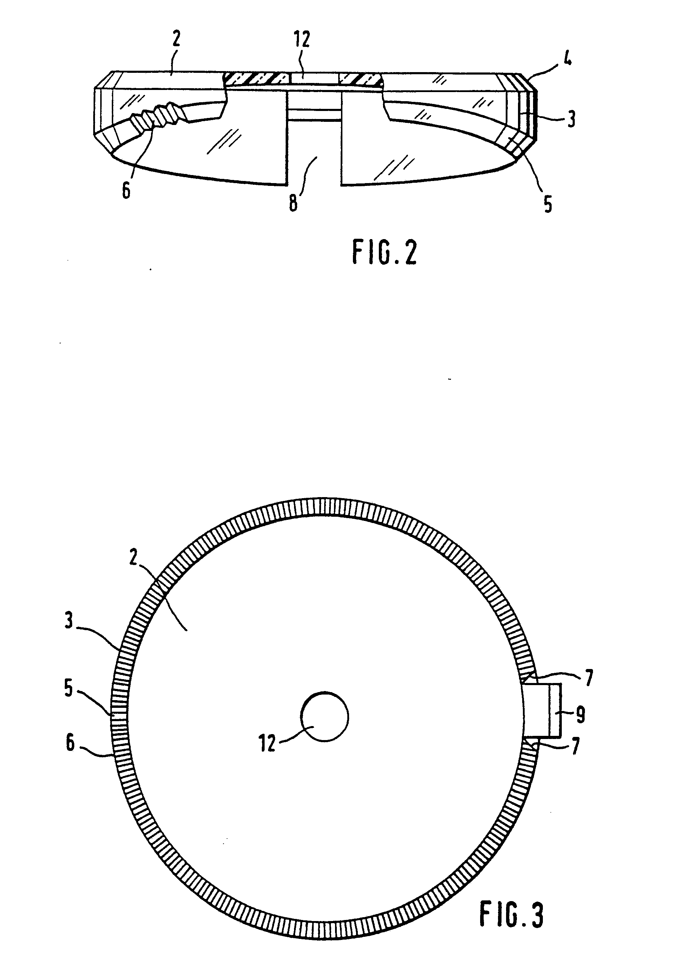

Figur 2 eine Seitenansicht des Ziffernblattes der Instrumente nach Figur 1
Figur 3 eine Ansicht von unten des Ziffernblattes der Instrumente nach Figur 1

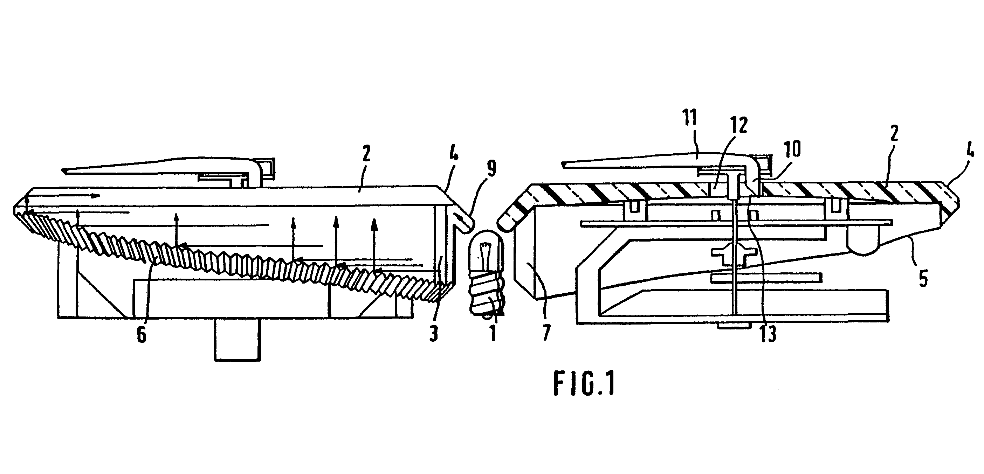

Die in Figur 1 nebeneinander angeordneten Instrumente sind im Armaturenbrett eines Kraftfahrzeuges anordenbare Instrumente und besitzen gleiche Beleuchtungseinrichtungen.

Zwischen den beiden Instrumenten ist eine einzige Lichtquelle 1 angeordnet. Die Beleuchtungseinrichtungen besitzen ein transparentes Ziffernblatt 2, das einstückig mit einem ringförmigen hohlzylindrischen Lichtleiterrand 3 ausgebildet ist.

Der Lichtleiterrand 3 ist längs des Umfangsrandes des Ziffernblatts 2 angeordnet, der mit einer gegenüber der Ebene des Ziffernblatts 2 geneigten lichtreflektierenden Fläche 4 versehen ist. Die radiale Breite des Lichtleiterrandes 3 entspricht etwa der radialen Breite der Fläche 4. Diese Fläche 4 dient zum Umlenken der vom Lichtleiterrand 3 axial zur Fläche 4 geleiteten Lichtstrahlen in die Ebene des Ziffernblattes 2.

Der Lichtleiterrand 3 hat im Bereich der Lichtquelle 1 seine größte Höhe, die von dort ausgehend nach einer quadratischen Funktion sich bis zu dem der Lichtquelle 1 entferntesten Bereich abnimmt.

Die dem Ziffernblatt 2 abgewandte Stirnseite des Lichtleiterrandes 3 ist dabei als Reflexionsfläche 5 zum Umlenken der in Umfangsrichtung im Lichtleiterrand 3 verlaufenden Lichtstrahlen zur Fläche 4 des Ziffernblattes 2 ausgebildet.

Dazu ist die Reflexionsfläche 5 mit einer Vielzahl in gleichem Abstand nebeneinander angeordneter Umlenkflächen bildender Kerben 6 gleicher Tiefe ausgebildet. Die den in Umfangsrichtung im Lichtleiterrand 3 verlaufenden Lichtstrahlen zugewandten Flanken der Kerben 6 lenken dabei die Lichtstrahlen um.

In beide Umfangsrichtungen eingeleitet werden diese Lichtstrahlen in den Lichtleiterrand 3 durch Einkopplungsflächen 7, die an einer Ausnehmung 8 im Bereich der Lichtquelle 1 im Lichtleiterrand 3 ausgebildet sind.

Darüber hinaus führt ein Lichtleiteransatz 9 vom Ziffernblatt 2 aus direkt zur Lichtquelle 1 und leitet die von ihm erfaßten Lichtstrahlen direkt zum Ziffernblatt 2.

Zur Reduzierung von Lichtverlusten ist das Ziffernblatt 2 von radial außen zur Mitte hin mit einem sich verringernden Querschnitt ausgebildet.

Das zur Mitte des Ziffernblatts 2 geleitete Licht kann von einer Leiterfahne 10 eines transparenten Zeigers 11 des Instruments erfaßt und zur Beleuchtung des Zeigers 11 in diesen geleitet werden. Dazu besitzt die in einer Öffnung 12 des Ziffernblatts 2 hineinragende Leiterfahne 10 eine Lichtumlenkfläche 13.

In Figur 1 werden von der Lichtquelle 1 zwei Beleuchtungseinrichtungen mit Licht versorgt. Es versteht sich, daß darüber hinaus noch weitere Beleuchtungseinrichtungen angeordnet sein können, die ebenfalls von dieser einen Lichtquelle versorgt werden.

**Patentansprüche**

1. Beleuchtungseinrichtung für ein Ziffernblatt (2) aus einem transparentem Material, mit einer längs des Umfangsrandes am Ziffernblatt ausgebildeten, gegenüber der Ebene des Ziffernblattes geneigten, lichtreflektierenden Fläche (4) zum Umlenken von Lichtstrahlen einer hinter der Ebene des Ziffernblattes angeordneten Lichtquelle (1) in das Ziffernblatt, dadurch gekennzeichnet, daß das Ziffernblatt (2) mit einem von der lichtreflektierenden Fläche (4) ausgehenden hohlzylindrischen Lichtleiterrand (3) ausgebildet ist, der Einkopplungsflächen (7) zum Einkoppeln des Lichts der Lichtquelle (1) in Umfangsrichtung in den Lichtleiterrand (3) besitzt, mit ausgehend von den Einkopplungsflächen (7) sich verringernder Höhe des Lichtleiterrandes (3) und Ausbildung der dem Ziffernblatt (2) abgewandten Stirnseite des Lichtleiterrandes (3) als die in Umfangsrichtung im Lichtleiterrand (3) verlaufenden Lichtstrahlen zur lichtreflektierenden Fläche (4) umlenkende Reflexionsfläche (5).

2. Beleuchtungseinrichtung nach Anspruch 1, dadurch gekennzeichnet, daß der hohlzylindrische Lichtleiterrand (3) ringförmig ist.

3. Beleuchtungseinrichtung nach einem der vorhergehenden Ansprüche, dadurch gekennzeichnet, daß die Breite des Lichtleiterrandes (3) etwa der Breite der lichtreflektierenden Fläche (4) des Ziffernblattes (2) entspricht.

4. Beleuchtungseinrichtung nach einem der vorhergehenden Ansprüche, dadurch gekennzeichnet, daß die Höhe des Lichtleiterrandes (3) linear sich verringernd ausgebildet ist.

5. Beleuchtungseinrichtung nach einem der Ansprüche 1 - 3, dadurch gekennzeichnet, daß die Höhe des Lichtleiterrandes (3) nach einer quadratischen Funktion sich verringernd ausgebildet ist.

6. Beleuchtungseinrichtung nach einem der vorhergehenden Ansprüche, dadurch gekennzeichnet, daß die Reflexionsfläche (5) quer zur Erstreckung des Lichtleiterrandes (3) geneigt ist.

7. Beleuchtungseinrichtung nach einem der vorhergehenden Ansprüche, dadurch gekennzeichnet, daß die Reflexionsfläche (5) aus einer Vielzahl in Längserstreckung des Lichtleiterrandes (3) hintereinander angeordneten Umlenkflächen gebildet ist.

8. Beleuchtungseinrichtung nach Anspruch 7, dadurch gekennzeichnet, daß die Umlenkflächen mit gleichem Abstand zueinander und/oder gleicher Höhe von der Stirnseite des Lichtleiterrandes (3) aus ausgebildet sind.

9. Beleuchtungseinrichtung nach Anspruch 7, dadurch gekennzeichnet, daß die Umlenkflächen die den im Lichtleiterrand (3) in Umfangsrichtung verlaufenden Lichtstrahlen zugewandten Flanken von an der Stirnseite des Lichtleiterrandes (3) ausgebildeten Kerben (6) sind.

10. Beleuchtungseinrichtung nach einem der vorhergehenden Ansprüche, dadurch gekennzeichnet, daß die Lichtquelle (1) radial außerhalb des Lichtleiterrandes (3) angeordnet und ein Lichtleiteransatz (9) vom Ziffernblatt (2) zur Lichtquelle (1) geführt ist.

11. Beleuchtungseinrichtung nach einem der vorhergehenden Ansprüche, dadurch gekennzeichnet, daß der Lichtquelle (1) die Einkopplungsflächen (7) mehrerer Ziffernblätter (2) zugewandt sind.

12. Beleuchtungseinrichtung nach einem der vorhergehenden Ansprüche, dadurch gekennzeichnet, daß der Querschnitt des Ziffernblatts (2) sich vom Umfangsrand zur Mitte des Ziffernblatts (2) verringernd ausgebildet ist.

13. Beleuchtungseinrichtung nach einem der vorhergehenden Ansprüche, dadurch gekennzeichnet, daß im Ziffernblatt (2) ein oder mehrere durchgehende Öffnungen (12) ausgebildet sind, durch die Spindelantriebe und/oder Zeigernaben von Zeigern (11) hindurchführbar sind.

## Claims

1. Illuminating device for a dial (2) made of a transparent material with a light-reflecting surface (4) constructed along the perimeter of the dial and inclined in relation to the plane of the dial to deflect into the dial the light rays from a light source (1) positioned behind the plane of the dial, characterized in that the dial (2) is constructed with a hollow-cylindrical light-conducting edge (3) which extends from the light reflecting surface (4) and which has input surfaces (7) to input the light from the light source (1) into the light-conducting edge (3) in the circumferential direction, the light-conducting edge (3) having a decreasing height as it extends from the input surfaces (7), and the face of the light-conducting edge (3) facing away from the dial (2) being constructed as a reflection surface (5) which deflects to the light-reflecting surface (4) the light rays passing in the circumferential direction in the light-conducting edge (3).

2. Illuminating device according to Claim 1, characterized in that the hollow-cylindrical light-conducting edge (3) is annular.

3. Illuminating device according to one of the preceding Claims, characterized in that the width of the light-conducting edge (3) corresponds approximately to the width of the light-reflecting surface (4) of the dial (2).

4. Illuminating device according to one of the preceding Claims, characterized in that the height of the light-conducting edge (3) is constructed so that it decreases linearly.

5. Illuminating device according to one of Claims 1 - 3, characterized in that the height of the light-conducting edge (3) is constructed so that it decreases in accordance with a quadratic function.

6. Illuminating device according to one of the preceding Claims, characterized in that the reflection surface (5) is inclined diagonally to the extension of the light-conducting edge (3).

7. Illuminating device according to one of the preceding Claims, characterized in that the reflection surface (5) is formed from a large number of deflecting surfaces positioned one after the other in the longitudinal extension of the light-conducting edge (3).

8. Illuminating device according to Claim 7, characterized in that the deflecting surfaces are constructed at equal distances from one another and/or with equal heights from the face of the light-conducting edge (3).

9. Illuminating device according to Claim 7, characterized in that the deflecting surfaces are the flanks, facing towards the light rays passing in the circumferential direction in the light-conducting edge (3), of indentations formed on the face of the light-conducting edge (3).

10. Illuminating device according to one of the preceding Claims, characterized in that the light source (1) is placed radially outside the light-conducting edge (3) and a light-conducting projection (9) is led from the dial (2) to the light source (1).

11. Illuminating device according to one of the preceding Claims, characterized in that the light source (1) faces towards the input faces (7) of a plurality of dials (2).

12. Illuminating device according to one of the preceding claims, characterized in that the cross-section of the dial (2) is constructed so that it decreases from the perimeter towards the centre of the dial (2).

13. Illuminating device according to one of the preceding claims, characterized in that one or more openings (12) are made through the dial (2) through which can be passed the spindle drives and/or pointer hubs of pointers (11).

**Revendications**

1. Dispositif d'éclairage pour un cadran (2) en matériau transparent, comportant une surface (4) disposée le long du bord périphérique du cadran, inclinée par rapport à la surface du cadran et réfléchissant la lumière, pour renvoyer dans le cadran les rayons lumineux d'une source lumineuse (1) disposée derrière le plan du cadran, dispositif caractérisé en ce que le cadran (2) est conçu avec un bord cylindrique creux (3), conducteur de la lumière, qui part de la surface (4) réfléchissant la lumière et qui possède des surfaces d'introduction (7), pour introduire la lumière de la source lumineuse (1), dans la direction périphérique, dans le bord (3) conducteur de la lumière; avec une hauteur du bord (3) conducteur de la lumière qui va en diminuant en partant des surfaces d'introduction (7) et avec une conception de la face frontale, côté opposé au cadran (2), du bord (3) conducteur de la lumière sous forme de surface réfléchissante (5), qui renvoie vers la surface (4) réfléchissant la lumière les rayons lumineux dirigés dans la direction périphérique dans le bord (3) conducteur de la lumière.

2. Dispositif d'éclairage selon la revendication 1, caractérisé en ce que le bord cylindrique creux (3), conducteur de la lumière, est de forme annulaire.

3. Dispositif d'éclairage selon l'une des revendications précédentes, caractérisé en ce que la largeur du bord (3), conducteur de la lumière, correspond à peu près à la largeur de la surface (4) du cadran (2) qui réfléchit la lumière.

4. Dispositif d'éclairage selon l'une des revendications précédentes, caractérisé en ce que le bord (3), conducteur de la lumière, présente une hauteur qui diminue linéairement.

5. Dispositif d'éclairage selon l'une des revendications 1 - 3, caractérisé en ce que le bord (3), conducteur de la lumière, présente une hauteur qui va en diminuant selon une fonction du second degré.

6. Dispositif d'éclairage selon l'une des revendications précédentes, caractérisé en ce que la surface réfléchissante (5) est inclinée obliquement par rapport à la direction dans laquelle s'étend longitudinalement le bord (3) conducteur de la lumière.

7. Dispositif d'éclairage selon l'une des revendications précédentes, caractérisé en ce que la surface réfléchissante (5) est formée de plusieurs surfaces de renvoi disposées l'une derrière l'autre dans la direction dans laquelle s'étend longitudinalement le bord (3) conducteur de la lumière.

8. Dispositif d'éclairage selon la revendication 7, caractérisé en ce que les surfaces de renvoi sont disposées avec une même distance de l'une à l'autre et/ou une même hauteur depuis la face frontale du bord (3) conducteur de la lumière.

9. Dispositif d'éclairage selon la revendication 7, caractérisé en ce que les surfaces de renvoi sont les flancs, orientés vers les rayons lumineux dirigés en direction périphérique dans le bord (3) conducteur de la lumière, d'encoches (6) formées sur la face frontale du bord (3) conducteur de la lumière.

10. Dispositif d'éclairage selon l'une des revendications précédentes, caractérisé en ce que la source lumineuse (1) est disposée radialement à l'extérieur du bord (3) conducteur de la lumière; et en ce qu'un embout (9), conducteur de la lumière, va du cadran (2) à la source lumineuse (1).

11. Dispositif d'éclairage selon l'une des revendications précédentes, caractérisé en ce que les surfaces d'introduction (7) de plusieurs cadrans (2) sont orientées vers la source lumineuse (1).

12. Dispositif d'éclairage selon l'une des revendications précédentes, caractérisé en ce que le cadran (2) présente une section qui va en diminuant, depuis le bord périphérique, vers le milieu du cadran (2).

13. Dispositif d'éclairage selon l'une des revendications précédentes, caractérisé en ce que dans le cadran (2) sont prévues une ou plusieurs ouvertures traversantes (12), par lesquelles on peut faire passer des entrainements d'axes et/ou des moyeux d'aiguilles (11).

FIG.1

EP 0 111 622 B1

FIG.2

FIG.3